(19) Europäisches Patentamt / European Patent Office / Office européen des brevets

(11) **EP 3 370 902 B1**

(12) **FASCICULE DE BREVET EUROPEEN**

(45) Date de publication et mention de la délivrance du brevet:
**18.09.2019 Bulletin 2019/38**

(51) Int Cl.:
*B22F 5/00* *(2006.01)*    *C04B 35/64* *(2006.01)*
*B29C 33/00* *(2006.01)*    *B29C 43/00* *(2006.01)*
*B22F 3/105* *(2006.01)*    *B22F 3/14* *(2006.01)*
*B22F 3/15* *(2006.01)*    *B22F 3/17* *(2006.01)*

(21) Numéro de dépôt: **16794970.0**

(22) Date de dépôt: **04.11.2016**

(86) Numéro de dépôt international:
**PCT/EP2016/076657**

(87) Numéro de publication internationale:
**WO 2017/077028 (11.05.2017 Gazette 2017/19)**

(54) **MISE EN OEUVRE D'UNE INTERFACE DÉFORMABLE POUR LA FABRICATION DE PIÈCES COMPLEXES**

VERWENDUNG EINER VERFORMBAREN ZWISCHENSCHICHT ZUR HERSTELLUNG KOMPLEXER TEILE

USE OF A DEFORMABLE INTERFACE FOR THE PRODUCTION OF COMPLEX PARTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.11.2015 FR 1560564**

(43) Date de publication de la demande:
**12.09.2018 Bulletin 2018/37**

(73) Titulaires:
• **Université Toulouse III-Paul Sabatier**
**31062 Toulouse Cedex 9 (FR)**
• **Centre National de la Recherche Scientifique**
**75794 Paris Cedex 16 (FR)**

(72) Inventeurs:
• **ESTOURNES, Claude**
**31370 Rieumes (FR)**
• **MANIERE, Charles**
**31230 L'Isle-en-Dodon (FR)**
• **DURAND, Lise**
**31000 Toulouse (FR)**

(74) Mandataire: **Vidon Brevets & Stratégie**
**16B, rue de Jouanet**
**BP 90333**
**35703 Rennes Cedex 7 (FR)**

(56) Documents cités:
**WO-A1-2015/007966**

• **THOMAS VOISIN ET AL: "Temperature control during Spark Plasma Sintering and application to up-scaling and complex shaping", JOURNAL OF MATERIALS PROCESSING TECHNOLOGY, vol. 213, no. 2, 1 février 2013 (2013-02-01), pages 269-278, XP055340828, NL ISSN: 0924-0136, DOI: 10.1016/j.jmatprotec.2012.09.023 cité dans la demande**
• **ATTIA U M ET AL: "Creating movable interfaces by micro-powder injection moulding", JOURNAL OF MATERIALS PROCESSING TECHNOLOGY, vol. 214, no. 2, 19 septembre 2013 (2013-09-19), pages 295-303, XP028796888, ISSN: 0924-0136, DOI: 10.1016/J.JMATPROTEC.2013.09.012**
• **PAVIA A ET AL: "Electro-thermal measurements and finite element method simulations of a spark plasma sintering device", JOURNAL OF MATERIALS PROCESSING TECHNOLOGY, ELSEVIER, NL, vol. 213, no. 8, 10 février 2013 (2013-02-10), pages 1327-1336, XP028547404, ISSN: 0924-0136, DOI: 10.1016/J.JMATPROTEC.2013.02.003 cité dans la demande**

**Description**

**1. Domaine**

Le domaine de l'invention est celui de la fabrication de pièces mécaniques de forme complexe par densification de matériaux pulvérulents ou poreux.

Plus particulièrement, l'invention se rapporte à l'amélioration d'un assemblage de matériaux pulvérulents ou poreux adapté pour être densifié sous charge, tant dans sa mise en oeuvre que dans les caractéristiques techniques des pièces mécaniques complexes obtenues.

**2. Art antérieur**

Nombre de procédés de densification de poudres ou de matériaux poreux sont aujourd'hui connus et mis en oeuvre quotidiennement dans l'industrie. Ces procédés incluent notamment le forgeage, le pressage à chaud (« *Hot Pressing* » en anglais), le pressage isostatique à chaud (« *Hot Isostatic Pressing* » en anglais) et le frittage flash, également nommé SPS (« *Spark Plasma Sintering* » en anglais) dans la description suivante et visent à consolider un volume défini de poudres métalliques, de céramiques, ou de polymères, par chauffage de ce dernier et application d'une pression uniaxiale ou multiaxiale.

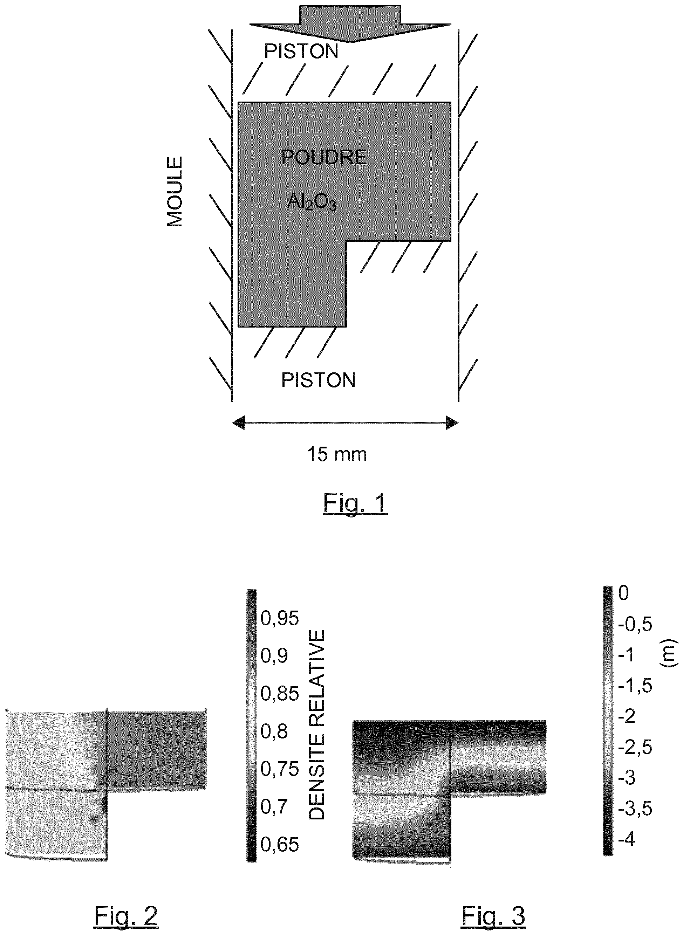

Le SPS en particulier est connu pour soumettre un volume cylindrique de poudres comprimées à un courant pulsé permettant d'accroître significativement les cinétiques de densification de ces poudres et ainsi d'obtenir des pièces mécaniques dont les microstructures fines sont préservées. Les modes de densification mis en oeuvre par le SPS présentent cependant l'inconvénient de causer des inhomogénéités de densification dans le cas de pièces de formes complexes possédant d'importantes différences d'épaisseurs. Ainsi, selon la publication « A Numerical Model for Powder Densification by SPS Technique », par P. Mondalek, L. Silva, M. Bellet, Advanced Engineering Materials. 13 (2011*),* une forme cylindrique en T possède en fin de frittage une zone poreuse de densité relative de l'ordre de 70%. Afin de mieux comprendre ce phénomène, une simulation impliquant une pièce cylindrique possédant une marche est mise en oeuvre. La géométrie d'assemblage initiale du SPS, ainsi que le champ de densification et le champ de déplacement vertical en fin de cycle, sont illustrés par les **figures 1 à 3.** La simulation consiste en un modèle purement mécanique, avec un cycle de température imposé sur toute la géométrie. Les conditions aux limites sont constituées d'un déplacement fixé selon l'axe z du cylindre du piston inférieur et une force de compression est appliquée sur la face du dessus d'un volume cylindrique de poudre d'alumine. Les conditions latérales sont des conditions de non-pénétration. Le cycle thermique est défini selon une élévation de température de 100 K/min jusqu'à 1400 °C, suivi d'un palier de 5 minutes. La force appliquée est 18000 N. On observe qu'à l'état final, la zone de moindre épaisseur est dense et la zone d'épaisseur importante est poreuse avec une densité relative de l'ordre de 80% (**figure 2**). Le champ de déplacement vertical (**figure 3**) se traduit par des lignes d'iso-déplacements fortement courbées qui contrastent avec les lignes d'un échantillon cylindrique sans frottement, où les lignes d'iso-déplacements sont horizontales. Ce résultat s'explique par la non-uniformité du retrait observée entre les deux zones d'épaisseurs différentes. Ainsi, la zone de faible épaisseur se densifie plus rapidement car, à déplacement égal, sa distance de retrait maximale est plus rapidement atteinte qu'au sein de la zone de forte épaisseur. Ainsi, une fois la zone de faible épaisseur totalement densifiée, le frittage s'interrompt et la zone de forte épaisseur nécessitant plus de retrait ne peut terminer son processus de densification. L'hétérogénéité du champ de densification mise en évidence par la simulation découle de ce phénomène. Dans le cadre d'un tel assemblage, la réalisation de pièces de formes complexes par le procédé SPS classique est par conséquent rendue difficile compte tenu de la géométrie complexe des pièces à fabriquer qui se traduit par des différences d'épaisseur et implique des variations de retraits.

A noter que ces problèmes d'hétérogénéité de densification concernent exclusivement le frittage de pièces de forme complexe. En effet, dans le cadre de volumes à densifier de forme simple, c'est-à-dire présentant une épaisseur constante, les distances de retrait sont partout les mêmes et permettent ainsi d'obtenir une densification homogène de la pièce. Il n'existe donc aucune incitation à s'inspirer de documents ayant trait au frittage de pièces de forme non-complexe pour résoudre les problèmes observés d'hétérogénéité de densification.

Il existe un besoin de pallier l'hétérogénéité de densification des pièces complexes fabriquées par des procédés connus de densification sous charge.

**3. Résumé**

La technique proposée ne présente pas ces inconvénients de l'art antérieur. Plus particulièrement, dans au moins un mode de réalisation, la technique proposée se rapporte à un assemblage pour densification sous charge selon au moins une direction de compression, comprenant :

- au moins un volume à densifier de composition pulvérulente et/ou poreuse, ce volume à densifier présentant selon la direction de compression des variations d'épaisseur,
- au moins une contre-forme de composition pulvérulente et/ou poreuse, présentant au moins une face en regard d'au moins une portion dudit volume, ledit assemblage étant caractérisé en ce que ladite portion et ladite face sont séparées par au moins une couche interfaciale déformable.

On entend par « procédé de densification sous charge » tout procédé de frittage sous charge ou de fluage visant à consolider un volume défini de poudres métalliques, de céramiques, ou de polymères, par chauffage de ce dernier et application d'une pression uniaxiale, multiaxiale ou isostatique. Ces procédés incluent notamment le forgeage, le pressage à chaud, le pressage isostatique à chaud, le SPS, ou tout autre procédé connu suivant ce même principe général de fonctionnement. L'invention se rapporte donc à un assemblage adapté à la mise en oeuvre de tels procédés de densification sous charge, et présentant des caractéristiques techniques spécifiques (point de fusion, capacité thermique, énergie d'activation etc.) lui permettant de résister à d'importantes contraintes thermiques (ex : élévation subite de la température, de l'ordre du millier de degrés) et mécaniques (compression de l'ordre de la dizaine de milliers de Newtons).

Les termes «volume à densifier» désignent un volume de poudres et/ou de matériau poreux destiné à former une pièce mécanique suite à la mise en oeuvre du procédé de densification, d'où une désignation équivalente par les termes « pièce à former » dans la présente description. Un tel volume est de forme complexe, ce qui se traduit structurellement par des variations d'épaisseur de segments continus du volume à densifier, dans le cadre d'une projection selon la direction de compression. Il convient de distinguer l'épaisseur d'une forme et sa hauteur, cette dernière pouvant désigner des segments discontinus d'un volume, selon cette même projection. A titre d'exemple, un volume en forme de double cône de révolution, lorsque considéré selon son axe de révolution, présente une hauteur constante mais une épaisseur variable.

Une portion surfacique du volume à densifier, c'est à dire tout ou partie de sa surface extérieure, présente une complémentarité de forme avec au moins une face d'une contre-forme. Dans la suite de la description, les termes « portion surfacique » et « portion » sont considérés comme équivalents. Selon un mode de réalisation particulier, l'assemblage peut également comprendre une pluralité de contre-formes. Une couche interfaciale fait quant à elle office de séparation entre cette portion de la pièce à former et la contre-forme. Le caractère déformable de la couche interfaciale se traduit par une épaisseur, une réactivité chimique et une capacité de compaction négligeables au regard des matériaux entrant dans les compositions respectives du volume à densifier et de la contre-forme. Au cours de la densification de l'assemblage, cette couche interfaciale va ainsi se déformer et suivre le retrait du volume à densifier jusqu'à former une contre-forme de la portion concernée de la pièce à fabriquer, une fois le processus de densification achevé. Le déplacement de la couche interfaciale permet de répartir de manière homogène sur la pièce complexe à former l'ensemble des contraintes transmises par la contre-forme et l'outillage mis en oeuvre pour la densification sous charge (piston-matrice). La pièce complexe obtenue présente en conséquence une homothétie de retrait sur l'ensemble de sa surface (portion) en contact avec la couche interfaciale. De manière complémentaire, les failles et fractures pouvant être générées au sein de la contre-forme au cours du processus de densification et/ou d'une étape ultérieure de fracturation sont tout ou en partie bloquées par la couche interfaciale déformable et ne se propagent donc pas dans la pièce à former, dont l'aspect de surface, et plus généralement la microstructure, sont préservées. Enfin, un tel assemblage permet la fabrication simultanée d'une ou de plusieurs pièces de forme complexe, dans le cadre d'un procédé de densification sous charge dont les directions de compression sont limitées (exemple : compression uniaxiale).

La présente invention repose ainsi sur un concept nouveau et inventif qui consiste à fournir un assemblage pour densification sous charge de formes complexes, mettant en oeuvre une couche interfaciale déformable, permettant la fabrication simultanée d'une ou de plusieurs pièces de forme complexe, lesdites pièces présentant une homothétie de densification ainsi qu'une microstructure préservée. Un tel assemblage présente notamment l'avantage de pouvoir être mis en oeuvre dans le cadre d'un procédé de densification sous charge de complexité limitée.

Selon une caractéristique particulière de l'invention, les variations d'épaisseurs sont continues.

La mise en oeuvre de l'invention permet donc d'obtenir une homothétie de densification ainsi qu'une microstructure préservée pour des volumes complexes présentant des variations constantes d'épaisseurs, par exemple des volumes de forme sphérique ou pyramidale.

Selon une caractéristique particulière, ladite contre-forme et ledit volume à densifier sont de formes distinctes.

Cette caractéristique est la conséquence de la mise en oeuvre de l'invention pour des formes particulièrement complexes.

Selon une caractéristique particulière, la contre-forme englobe le volume en totalité.

Une telle configuration permet ainsi la fabrication de pièces dont l'ensemble du pourtour présente une homothétie de densification.

Selon une autre caractéristique particulière de l'invention, la contre-forme englobe une partie seulement du volume à densifier.

De manière avantageuse, la vitesse de densification du matériau constituant ledit volume est supérieure ou égale à la vitesse de densification du matériau constituant ladite contre-forme.

Une telle variation de vitesse de densification peut être due aux différences de composition chimique existant entre deux matériaux, par exemple entre l'alumine et le zircone, ou à des différences de microstructure, par exemple entre deux matériaux de même composition chimique mais de granulométrie différentes.

Tel qu'illustré dans la suite de la description, dans le cadre exclusif des volumes de forme complexe, lorsque le matériau de la contre-forme se densifie plus rapidement que celui de la pièce à former, le premier stoppe la densification de la pièce avant que celle-ci ne soit complétement dense, ce qui se traduit par des hétérogénéités de densité au sein de la pièce formée. Au contraire lorsque le matériau constituant la pièce à former se densifie plus rapidement que la contre forme, le procédé de densification permet d'aboutir à la densification totale de la pièce à former.

Ce choix particulier de matériaux constituant le volume à former et la contre-forme, et plus généralement la prise en compte des règles de densification de ces matériaux, permet donc d'améliorer l'homogénéité de densification de la pièce formée.

Selon une caractéristique particulière, le volume à densifier et la contre-forme présentent une composition chimique et une microstructure identiques.

La mise en oeuvre de matériaux de même composition chimique et de même microstructure pour la pièce à former et la (ou les) contre-forme(s) a pour avantage de faciliter la prévision des retraits de matière générés au cours de l'étape de densification.

De manière alternative, le volume à densifier et la contre-forme présentent une composition chimique et/ou une microstructure différentes.

La mise en oeuvre de matériaux de compositions chimiques et/ou de microstructure différentes permet quant à elle d'élargir les possibilités se présentant au concepteur dans le choix des matériaux entrant dans la composition et la microstructure de la pièce à former, ou dans celle de la contre-forme. Il est ainsi possible de mettre en oeuvre, pour la constitution de la pièce à former, un matériau présentant des propriétés techniques avancées, tout en sélectionnant, pour la constitution de la contre-forme, un matériau au coût réduit.

Il convient toutefois de s'assurer de la non-interaction chimique de ces matériaux avec le matériau d'interface, interaction pouvant potentiellement nuire à la séparabilité des pièces finales.

Selon une caractéristique particulière, ladite portion et ladite face sont séparées par une pluralité de couches interfaciales déformables consécutives.

Le terme « consécutives » qualifie des couches interfaciales en contact direct les unes avec les autres.

Selon une caractéristique particulière, l'assemblage comprend une pluralité de volumes à densifier de forme complexe et au moins une contre-forme, tous de composition pulvérulente et/ou poreuse, ladite contre-forme présente au moins une face en regard d'au moins une portion de chacun desdits volumes, et lesdites faces et chacune desdites portions sont séparées par au moins une couche interfaciale déformable.

La fabrication simultanée d'une pluralité de pièces permet ainsi d'augmenter le rendement horaire du procédé de fabrication mettant en oeuvre un tel assemblage.

L'invention se rapporte aussi à un procédé de fabrication d'au moins une pièce de forme complexe, caractérisé en ce qu'il comprend :

- une étape d'incorporation au sein d'un assemblage pour densification sous charge selon au moins une direction de compression, d'une couche interfaciale déformable présentant une forme géométrique initiale et séparant au moins une portion d'un volume à densifier de composition pulvérulente et/ou poreuse et présentant des variations d'épaisseur selon ladite direction de compression, d'au moins une face d'une contre-forme de composition pulvérulente et/ou poreuse,
- une étape de densification sous charge dudit assemblage au cours de laquelle ladite couche interfaciale (9) est déformée pour adopter une forme géométrique finale distincte de ladite forme géométrique initiale.

Au cours de ce procédé de fabrication, le volume à densifier subit une déformation entre une forme géométrique initiale et une forme géométrique finale distincte. Cette déformation résulte des contraintes exercées par la contre-forme sur le pourtour de forme complexe du volume à densifier. A noter qu'une telle déformation géométrique n'intervient pas dans le cadre de la densification d'une forme simple, cette dernière conservant la même forme géométrique tout au long de la densification (en dépit bien entendu d'une réduction de son épaisseur).

Dans le cadre de la densification d'un volume de forme complexe, il est avantageux de prévoir les déformations à venir du volume à densifier, de la contre-forme, et de la couche interfaciale déformable.

Selon une caractéristique particulière, la hauteur finale en tout point souhaitée ($h_f$) de la pièce à former répond à la relation suivante :

$$h_i = h_f . \, d_f \, / \, d_i$$

Dans laquelle $h_i$ *représente* la hauteur d'étirement en tout point et $d_i$ et $d_f$ représentent les densités relatives initiale et finale de la pièce à former.

Cette équation dite « de la préforme » permet de mieux définir les déformations du volume à densifier, et de la couche interfaciale déformable.

La mise en place d'une telle étape d'incorporation de la couche interfaciale déformable est particulièrement complexe, compte tenu de la nécessité d'adapter cette dernière aux différents matériaux constituant la pièce à former, la contre-forme, et cette couche interfaciale.

Ainsi, selon un mode de réalisation particulier, ladite étape d'incorporation est mise en oeuvre par déposition pulvérulente de ladite (desdites) couche(s) interfaciale(s) sur la(es) zone(s) de ladite (desdites) contre-forme(s) placées en regard de la pièce à former mais également entre les contre-formes s'il y a lieu.

Selon un mode de réalisation alternatif, ladite étape d'incorporation est mise en oeuvre par insertion au sein dudit assemblage d'une ou plusieurs couche interfaciale solide, préférentiellement une feuille de graphite souple (ex : Papyex®), au préalable d'une étape de remplissage dudit assemblage avec les matériaux constituant respectivement la pièce à former et la(es) contre-forme(s).

Selon un mode de réalisation particulier, le procédé de fabrication comprend une étape d'extraction de ladite pièce depuis ledit assemblage, par destruction sacrificielle de ladite (desdites) contre-forme(s) et/ou de la(des)dite(s) couche(s) interfaciale(s) déformable(s).

Dans le cadre d'un assemblage connu de l'état de la technique, les risques de fragilisation de la pièce à former engendrés par la propagation de fissures depuis la(es) contre-forme(s) vers la pièce à former, suite à l'étape de fracturation, sont connus de l'Homme du Métier. Dans le cadre de l'invention, la connaissance de ces risques aurait ainsi détourné l'Homme du Métier de cette solution technique, et incité ce dernier à envisager un moyen alternatif d'extraction de la pièce formée depuis l'assemblage.

Bien que non décrit explicitement, les différents modes de réalisation décrits ci-dessus peuvent être mis en oeuvre selon n'importe quelle combinaison, ou sous-combinaison.

## 4. Figures

D'autres caractéristiques et avantages de l'invention apparaîtront plus clairement à la lecture de la description suivante de modes de réalisation particuliers, donnés à titre de simples exemples illustratifs et non limitatifs, et des figures annexées, à savoir :

- Figure 1 - Vue schématique d'un assemblage initial pour SPS de l'état de la technique mettant en oeuvre une pièce cylindrique présentant une marche,
- Figure 2 - Simulation illustrant le champ de densité relative en fin de frittage d'une pièce cylindrique présentant une marche,
- Figure 3 - Simulation illustrant le champ de déplacement vertical en fin de frittage d'une pièce cylindrique présentant une marche,
- Figure 4 - Vue schématique des étapes successives de mise en forme d'un assemblage selon un mode de réalisation particulier de l'invention,
- Figure 5 - Série de photographies illustrant l'étape d'extraction d'une pièce mécanique suite à la densification sous charge d'un assemblage selon un mode de réalisation particulier de l'invention,
- Figure 6 - Série de photographies illustrant l'empreinte qui permet de générer la forme initiale de la pièce à former et la pièce formée après densification d'un assemblage selon un mode de réalisation particulier de l'invention,
- Figure 7 - Vue schématique des étapes successives de mise en forme d'un assemblage selon un mode de réalisation alternatif de l'invention,
- Figure 8 - Photographie illustrant une pièce de forme conique, ainsi que des fragments de la contre-forme, obtenus suite à la densification sous charge d'un assemblage selon un mode de réalisation particulier de l'invention,
- Figure 9 - Photographie illustrant une pièce de forme pyramidale à base carrée, ainsi que des fragments de la contre-forme, obtenus suite à la densification sous charge d'un assemblage selon un mode de réalisation particulier de l'invention,
- Figure 10 - Photographie illustrant une pièce de forme pyramidale à base étoilée obtenue suite à la densification sous charge d'un assemblage selon un mode de réalisation particulier de l'invention,
- Figure 11 - Photographie illustrant deux fragments de la contre-forme obtenus suite à la densification sous charge d'un assemblage selon un mode de réalisation particulier de l'invention,
- Figure 12 - Image réalisée via un Microscope Electronique à Balayage (MEB) de la microstructure d'une fracture présente sur une partie sacrificielle de pyramide suite à la densification sous charge d'un assemblage selon un mode de réalisation particulier de l'invention,
- Figure 13 - Photographie illustrant un cône de zircone dense à 99% et d'une partie de la contre-forme (alumine dense à 98%), obtenus suite à la densification sous charge d'un assemblage selon un mode de réalisation particulier de l'invention,
- Figure 14 - Image MEB de la microstructure d'une fracture volontairement provoquée au centre d'un cône en zircone suite à la densification sous charge d'un assemblage selon un mode de réalisation particulier de l'invention,
- Figure 15 - Image MEB de la microstructure d'une fracture volontairement provoquée au bord dans les zones fines d'un cône en zircone suite à la densification sous charge d'un assemblage selon un mode de réalisation particulier de l'invention.

Les différents éléments illustrés par les figures ne sont pas nécessairement représentés à l'échelle réelle, l'accent étant davantage porté sur la représentation du fonctionnement général de l'invention.

## 5. Description détaillée de modes de réalisation particuliers de l'invention

Plusieurs modes de réalisation particuliers de l'invention sont présentés par la suite et se rapportent à la fabrication 1 via un procédé SPS 2 de pièces mécaniques 3 de forme complexe, en forme de demi-sphère, de cône, de pyramide à base carrée, et de pyramide à base étoilée. Il est bien entendu que la présente invention n'est nullement limitée par ces modes de réalisation particuliers et que d'autres modes de réalisation peuvent parfaitement être mis en oeuvre.

Ainsi, et selon des modes de réalisation alternatifs, l'invention concerne la fabrication 1 de pièces 3 complexes pouvant présenter une grande diversité de forme, avec des adaptations possibles du procédé de fabrication 1 en fonction du degré de complexité de ces formes. La complexité de forme résulte des variations d'épaisseurs de cette dernière selon la direction de compression. Cette complexité s'accroît pour des pièces présentant :

- Une base plane avec des différences de hauteurs et des dépouilles (facile à démouler)
- Une base non plane avec des différences de hauteurs et des dépouilles (facile à démouler)
- Une base plane avec des différences de hauteurs mais sans dépouilles (nécessite de segmenter la partie sacrificielle)
- Une base non plane sans dépouilles (nécessite de segmenter la partie sacrificielle)
- Une forme creuse (deux ou plusieurs parties nécessitant une étape supplémentaire d'assemblage).

De manière similaire, l'étape de densification 2 ne se limite pas à au SPS, mais concerne également le forgeage, le pressage à chaud, le pressage isostatique à chaud, ou tout autre procédé connu de consolidation et/ou de fluage de matériaux pulvérulents et/ou poreux.

5.1 Frittage SPS d'une demi-sphère

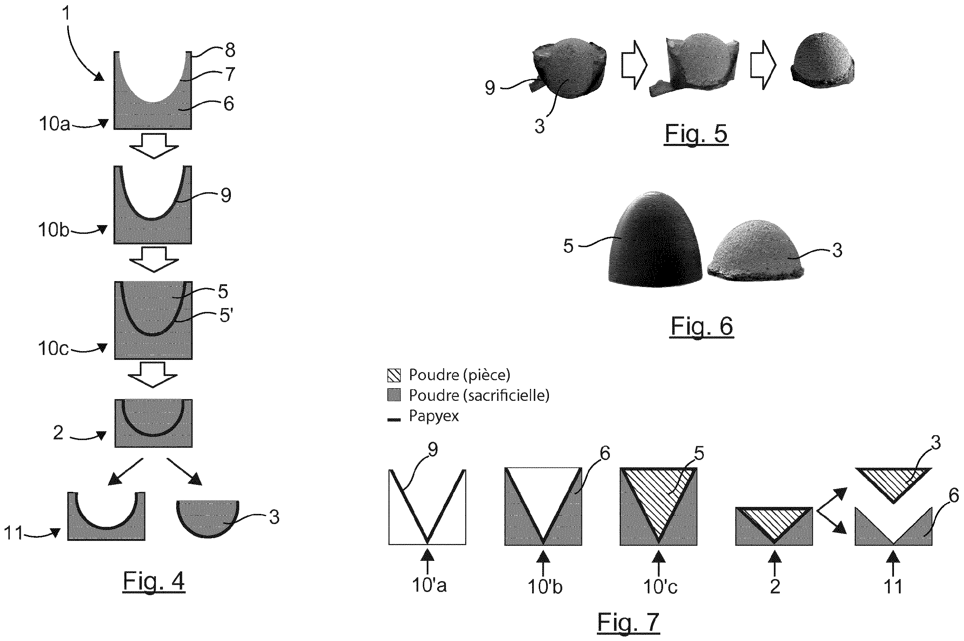

La **figure 4** illustre les étapes subséquentes d'un procédé de fabrication 1 visant à densifier un assemblage 4 par la mise en oeuvre d'un procédé SPS 2, afin d'obtenir une demi-sphère 3 en poly-méthacrylate de méthyle (PMMA).

Il convient de préciser que l'obtention d'une demi-sphère dense par la technologie SPS est très difficile, dans les limites des procédés de fabrication connus de l'état de la technique, compte tenu notamment de la densification rapide du pourtour du volume 5 de poudre destiné à former la demi-sphère 3 qui bloque de manière prématurée le processus de densification 2.

L'approche adoptée par les inventeurs consiste à placer dans un moule cylindrique 8 une demi-ellipsoïde 5 de poudre de PMMA et une contre-forme sacrificielle poreuse 6 intégrant une face 7 en regard du demi-ellipsoïde, avec une couche interfaciale déformable 9 permettant le démoulage de la pièce obtenue 3 et de la contre-forme sacrificielle 6 après frittage.

Selon des modes alternatifs de réalisation de l'invention, la poudre de PMMA entrant dans la composition de la pièce à former 5 peut être remplacée par de la poudre d'alumine, de zircone, ou par tout autre composition pulvérulente et/ou poreuse connue. De manière similaire, la contre-forme 6 peut être constituée de tout type de matériau pulvérulent et/ou poreux connu, ayant de préférence une courbe de densification proche de celle du matériau constituant la pièce à former 5 et que, de manière préférentielle, le couple formé soit composé de deux matériaux de même classe (par exemple : métal/métal ou céramique/céramique ou polymère/polymère).

Selon le présent mode de réalisation, la forme en demi-ellipsoïde a été choisie car il s'agit de la forme étirée de la demi-sphère souhaitée. Dans le cas d'une compression uniaxiale, d'une forme et contre-forme aux propriétés de densification proches, la hauteur d'étirement en tout point ($h_i$) est liée aux densités relatives initiale et finale de la pièce ($d_i$, $d_f$) et à la hauteur finale en tout point souhaitée ($h_f$), par la formule suivante:

$$h_i = h_f.\ d_f\ /\ d_i$$

De manière complémentaire, le logiciel de simulation COMSOL multiphysics® permet de simuler les distances de retrait et les déformations induites sur un volume donné suite à la mise en oeuvre d'un procédé de densification. Les publications « Temperature Control in Spark Plasma Sintering: An FEM Approach", de G. Molénat, L. Durand, J. Galy, A. Couret, Journal of Metallurgy. 2010 (2010), "Electro-thermal measurements and finite element method simulations of a spark plasma sintering device", de A. Pavia, L. Durand, F. Ajustron, V. Bley, A. Peigney, C. Estournès, Journal of Materials Processing Technology, 213(8), (2013), 1327-1336, et "Temperature control during Spark Plasma Sintering and application to up-scaling and complex shaping" de T. Voisin, L. Durand, N. Karnatak, S. Le Gallet, M. Thomas, Y. Le Berre, et al., Journal of Materials Processing Technology. 213 (2013) traitent également de cette problématique. Au vu de ce logiciel de simulation et des trois articles ci-dessus, un Homme du Métier dispose donc des éléments nécessaires pour déterminer la conformation du volume de poudre initial 5 en fonction de la forme souhaitée de la pièce 3 à fabriquer et du rapport des densités.

Au cours d'une première phase du procédé de fabrication 1, la poudre de PMMA est introduite dans un moule 8 en graphite. De manière préférentielle, un ou plusieurs liants tels que l'eau, le Rhodoviol™, peuvent être incorporés au mélange pulvérulent afin d'en améliorer les caractéristiques techniques. Par la suite, une empreinte est formée (étape 10a) sur le lit de poudre à l'aide d'une contre-forme semi-elliptique obtenue par impression 3D. Selon un mode de réalisation alternatif, la contre-forme peut également être formée via un procédé d'usinage.

Une couche 9 de poudre de nitrure du bore (poudre inerte au frittage) est ensuite déposée (étape 10b) sous forme de spray à la surface de l'empreinte. De manière alternative, cette poudre de nitrure de bore peut être remplacée par de la poudre de graphite ou tout autre matériau inerte à la consolidation et non réactif chimiquement avec le matériau constituant la pièce à former 5.

La cavité intérieure est alors remplie de poudre de PMMA (étape 10c), formant ainsi le volume 5 destiné à former la pièce 3 souhaitée. Enfin, l'ensemble refermé par deux pistons en graphite est placé dans un dispositif SPS pour l'étape de frittage 2. Au cours de cette étape, la couche interfaciale 9 de nitrure de bore va ainsi se déformer et suivre le demi-ellipsoïde qui va s'écraser au fur et à mesure du frittage jusqu'à former une demi-sphère 3 une fois le matériau densifié. La déformation de la couche interfaciale 9 le long de la portion inférieure 5' de la demi-ellipse 5 permet d'y répartir de manière homogène l'ensemble les contraintes transmises par la contre-forme 6. La demi-sphère 3 obtenue présente en conséquence une homothétie de retrait sur l'ensemble de la surface 5' en contact avec la couche interfaciale 9 déformée.

L'étape finale est l'extraction 11 de la pièce 3 en forme de demi-sphère depuis la contre-forme sacrificielle 6, réalisée par fracturation de la contre-forme sacrificielle 6 et de la couche interfaciale 9. Il a été observé que suite à cette étape d'extraction 11, les fissures s'arrêtent nettement au niveau de la couche interfaciale 9 de nitrure de bore, préservant ainsi la pièce 3 en demi-sphère qui reste intacte.

La **figure 5** présente une série de photographies illustrant l'étape d'extraction de la pièce 3 de l'assemblage 4, et notamment de la couche interfaciale 9. La **figure 6** illustre quant à elle le changement de forme induit de la couche interfaciale 9 suite à la mise en oeuvre du procédé SPS 2.

### 5.2 Frittage SPS d'un cône, d'une pyramide à base carrée et d'une pyramide à base étoilée

Selon des modes de réalisation alternatifs de l'invention, un cône, une pyramide à base carrée et une pyramide à base étoilée sont frittés à partir d'une poudre d'aluminium en utilisant une feuille de graphite (papyex® ) comme couche interfaciale 9. Tel qu'illustré par la **figure 7**, dans le cadre de l'utilisation du papyex, l'étape 10 de mise en place de l'assemblage 4 consiste à donner par pliage la forme souhaitée de la couche interfaciale 9 au papyex, puis de positionner (étape 10'a) le papyex 9 au sein de l'assemblage 4, avant de remplir d'un matériau pulvérulent et/ou poreux les zones correspondants à la pièce à former 5 (étape 10'c), et à la contre-forme 6 (étape 10'b).

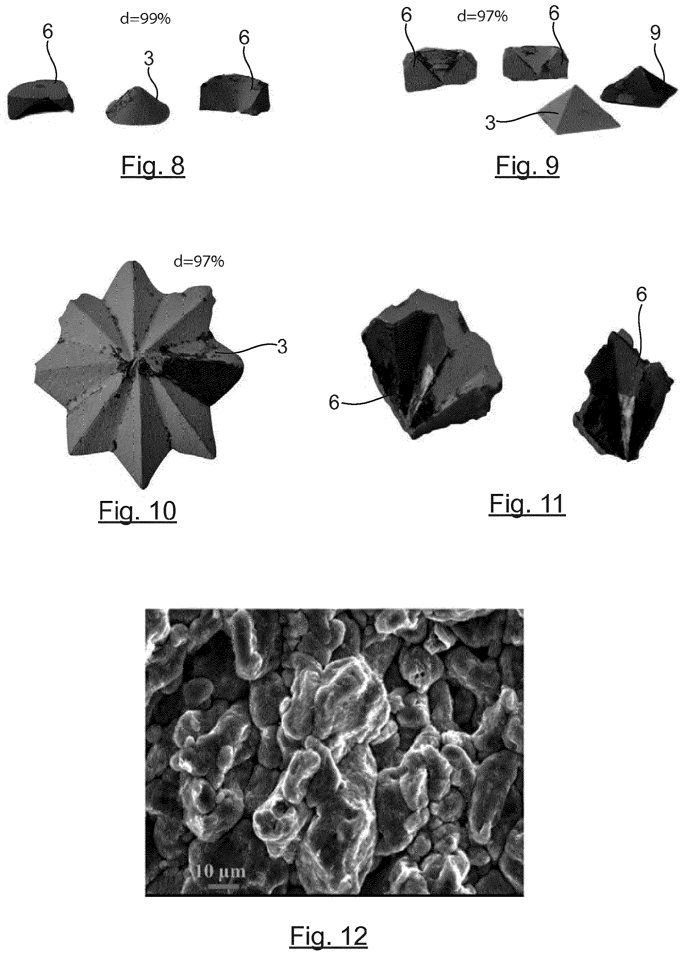

**Les figures 8 à 11** sont des photographies illustrant des pièces 3 de forme conique et pyramidales ainsi que les fragments de contre-forme, obtenus suite à la densification sous charge d'un assemblage selon ces modes de réalisation particuliers de l'invention. Tel qu'indiqué sur ces photographies, les densités respectives des pièces obtenues sont comprises entre 97% et 99%. On observe que les deux formes pyramidales possèdent toutes deux des arrêtes droites bien définies. Ce résultat est à l'évidence difficile à atteindre de par les procédés connus de coulage en moule sans usinage. La **figure 12** est une image réalisée via un Microscope Electronique à Balayage (MEB) de la microstructure d'une fracture présente sur une partie sacrificielle de la pyramide. Cette image traduit notamment la faible porosité et la ductilité satisfaisante de la couche interfaciale 9.

### 5.3 Mise en oeuvre de matériaux différents dans les compositions respectives de la pièce à former 5 et de la contre-forme 6

Selon un mode de réalisation particulier de l'invention, les compositions chimiques respectives du volume 5 destiné à former la pièce et de la contre-forme 6 sont différentes. En effet, bien que l'utilisation de matériaux de même nature ait pour avantage de faciliter la prévision des retraits de matière générés au cours de l'étape de densification, l'utilisation de matériaux de natures différentes permet quant à elle d'élargir les possibilités se présentant au concepteur dans le choix des matériaux entrant dans la composition de la pièce à former 5 ou dans celle de la contre-forme 6. Il est ainsi possible de mettre en oeuvre, pour la constitution de la pièce à former 5, un matériau présentant des propriétés techniques avancées, tout en sélectionnant, pour la constitution de la contre-forme sacrificielle 6, un matériau au coût réduit.

Ainsi, selon un mode de réalisation particulier, un volume conique 5 est composé de poudre de zircone ($ZrO_2$) lorsque la contre-forme 6 est composée de poudre d'alumine. Le couplage de ces deux poudres trouve son fondement dans leur comportement au frittage (température et courbe de densification) relativement similaire. La poudre de zircone formant le volume conique 5 se densifie ainsi légèrement plus rapidement que la poudre d'alumine formant la contre-forme 6, et permet ainsi l'obtention d'une pièce totalement densifiée.

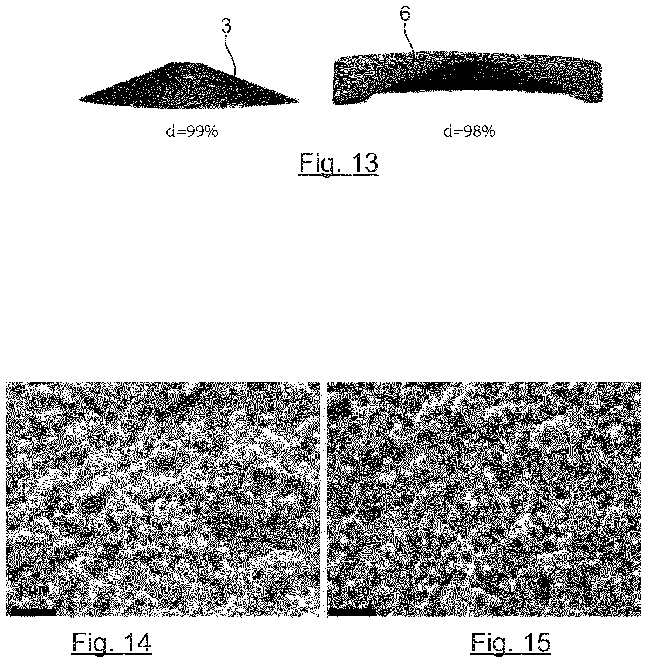

La **figure 13** est une photographie illustrant un cône de zircone dense à 99% et un fragment d'alumine dense à 98% obtenu suite à la mise en oeuvre du frittage SPS. Les **figures 14 et 15** sont des images MEB de fracture obtenues au centre et au bord du cône 3 en zircone. Ces images MEB permettent notamment d'observer que la microstructure au centre et au bord du cône 3 est homogène et présente une taille moyenne de grain de 200 nanomètres.

### Revendications

1. Assemblage (4) pour densification sous charge (2) par chauffage et application d'une pression selon au moins une direction de compression, comprenant :

   • au moins un volume à densifier (5) de composition pulvérulente et/ou poreuse, ledit volume à densifier (5) présentant selon ladite direction de compression des variations d'épaisseur,
   • au moins une contre-forme (6) de composition pulvérulente et/ou poreuse, présentant au moins une face (7) en regard d'au moins une portion (5') dudit volume (5),

ledit assemblage (4) étant **caractérisé en ce que** ladite portion (5') et ladite face (7) sont séparées par au moins une couche interfaciale déformable (9).

2. Assemblage (4) selon la revendication 1, **caractérisé en ce que** lesdites variations d'épaisseurs e sont continues.

3. Assemblage (4) selon l'une quelconque des revendication 1 et 2, **caractérisé en ce que** ladite contre-forme (6) et ledit volume (5) sont de formes distinctes.

4. Assemblage (4) selon l'une quelconque des revendication 1 à 3, **caractérisé en ce que** ladite contre-forme (6) englobe ledit volume (5) en totalité.

5. Assemblage (4) selon l'une quelconque des revendications 1 à 4, **caractérisé en ce que** la vitesse de densification du matériau constituant ledit volume (5) est supérieure ou égale à la vitesse de densification du matériau constituant ladite contre-forme (6).

6. Assemblage (4) selon l'une quelconque des revendications 1 à 5, **caractérisé en ce que** ledit volume (5) et ladite contre-forme (6) présentent une composition chimique et une microstructure identiques.

7. Assemblage (4) selon l'une quelconque des revendications 1 à 5, **caractérisé en ce que** ledit volume (5) et ladite contre-forme (6) présentent une composition chimique et/ou une microstructure différentes.

8. Assemblage (4) selon l'une quelconque des revendications 1 à 7, **caractérisé en ce que** ladite portion (5') et ladite face (7) sont séparées par une pluralité de couches interfaciales déformables (9) consécutives.

9. Assemblage (4) selon l'une quelconque des revendications 1 à 8, **caractérisé en ce que** :

    • ledit assemblage (4) comprend une pluralité de volumes à densifier (5) de composition pulvérulente et/ou poreuse et présentant des variations d'épaisseur selon ladite direction de compression,
    • ladite contre-forme (6) présente au moins une face (7) en regard d'au moins une portion (5') de chacun desdits volumes (5),
    • ladite face (7) et chacune desdites portions (5') sont séparées par au moins une couche interfaciale déformable (9).

10. Procédé de fabrication (1) d'au moins une pièce (3) de forme complexe, **caractérisé en ce qu'**il comprend :

    • une étape d'incorporation (10b, 10'a) au sein d'un assemblage (4) pour densification sous charge (2) par chauffage et application d'une pression selon au moins une direction de compression, d'une couche interfaciale déformable (9) présentant une forme géométrique initiale et séparant au moins une portion (5') d'un volume à densifier (5) de composition pulvérulente et/ou poreuse et présentant des variations d'épaisseur selon ladite direction de compression, d'au moins une face (7) d'une contre-forme (6) de composition pulvérulente et/ou poreuse,
    • une étape de densification sous charge (2) dudit assemblage (4) au cours de laquelle ladite couche interfaciale (9) est déformée pour adopter une forme géométrique finale distincte de ladite forme géométrique initiale.

11. Procédé de fabrication (1) selon la revendication 10, **caractérisé en ce qu'**il comprend une étape (11) d'extraction de ladite pièce (3) depuis ledit assemblage (4), par destruction sacrificielle de ladite contre-forme (6) et/ou de ladite couche interfaciale déformable (9).

**Patentansprüche**

1. Anordnung (4) zum Verdichten unter Last (2) durch Heizen und Anlegen eines Drucks in mindestens einer Kompressionsrichtung, die Folgendes umfasst:

    - mindestens ein zu verdichtendes Volumen (5) aus pulverförmiger und/oder poröser Zusammensetzung, wobei das zu verdichtende Volumen (5) entlang der Kompressionsrichtung Stärkenvariationen aufweist,
    - mindestens eine Gegenform (6) aus pulverförmiger und/oder poriger Zusammensetzung, die mindestens eine Fläche (7) gegenüber mindestens einem Abschnitt (5') des Volumens (5) aufweist,

    wobei die Anordnung (4) **dadurch gekennzeichnet ist, dass** der Abschnitt (5') und die Fläche (7) durch mindestens eine verformbare Zwischenschicht (9) getrennt sind.

2. Anordnung (4) nach Anspruch 1, **dadurch gekennzeichnet, dass** die Stärkenvariationen kontinuierlich sind.

3. Anordnung (4) nach einem der Ansprüche 1 und 2, **dadurch gekennzeichnet, dass** die Gegenform (6) und das Volumen (5) separate Formen haben.

**4.** Anordnung (4) nach einem der Ansprüche 1 bis 3, **dadurch gekennzeichnet, dass** die Gegenform (6) das Volumen (5) vollständig umgibt.

**5.** Anordnung (4) nach einem der Ansprüche 1 bis 4, **dadurch gekennzeichnet, dass** die Verdichtungsgeschwindigkeit des Materials, welches das Volumen (5) bildet, größer oder gleich der Verdichtungsgeschwindigkeit des Materials ist, das die Gegenform (6) bildet.

**6.** Anordnung (4) nach einem der Ansprüche 1 bis 5, **dadurch gekennzeichnet, dass** das Volumen (5) und die Gegenform (6) eine identische chemische Zusammensetzung und Mikrostruktur aufweisen.

**7.** Anordnung (4) nach einem der Ansprüche 1 bis 5, **dadurch gekennzeichnet, dass** das Volumen (5) und die Gegenform (6) eine unterschiedliche chemische Zusammensetzung und/oder Mikrostruktur aufweisen.

**8.** Anordnung (4) nach einem der Ansprüche 1 bis 7, **dadurch gekennzeichnet, dass** der Abschnitt (5') und die Fläche (7) von einer Mehrzahl aufeinanderfolgender verformbarer Zwischenschichten (9) getrennt sind.

**9.** Anordnung (4) nach einem der Ansprüche 1 bis 8, **dadurch gekennzeichnet, dass**:

- die Anordnung (4) eine Mehrzahl zu verdichtender Volumen (5) mit pulverförmiger und/oder poröser Zusammensetzung umfasst und welche Stärkenvariationen entlang der Kompressionsrichtung aufweisen,
- die Gegenform (6) mindestens eine Fläche (7) gegenüber mindestens einem Abschnitt (5') jedes der Volumen (5) aufweist,
- die Fläche (7) und jeder der Abschnitte (5') durch mindestens eine verformbare Zwischenschicht (9) getrennt sind.

**10.** Herstellungsverfahren (1) mindestens eines Teils (3) mit komplexer Form, **dadurch gekennzeichnet, dass** es Folgendes umfasst:

- einen Schritt des Einfügens (10b, 10'a) einer verformbaren Zwischenschicht (9), die eine ursprüngliche geometrische Form aufweist und mindestens einen Abschnitt (5') eines zu verdichtenden Volumens (5) mit pulverförmiger und/oder poröser Zusammensetzung und Stärkenvariationen entlang der Kompressionsrichtung aus mindestens einer Seite (7) einer Gegenform (6) aus pulverförmiger und/oder poröser Zusammensetzung trennt, innerhalb einer Anordnung (4) zum Verdichten unter Last (2) durch Heizen und Anlegen eines Drucks entlang mindestens einer Kompressionsrichtung,
- einen Schritt des Verdichtens der Anordnung (4) unter Last (2), in dessen Verlauf die Zwischenschicht (9) verformt wird, um eine abschließende geometrische Form anzunehmen, die von der ursprünglichen geometrischen Form unterschiedlich ist.

**11.** Herstellungsverfahren (1) nach Anspruch 10, **dadurch gekennzeichnet, dass** es einen Schritt (11) des Herausnehmens des Teils (3) aus der Anordnung (4) durch Opferzerstörung der Gegenform (6) und/oder der verformbaren Zwischenschicht (9) umfasst.

**Claims**

**1.** Assembly (4) for densification under load (2) along at least one direction of compression, comprising:

- at least one volume to be densified (5) having a powdery and/or porous composition, this volume to be densified (5) having variations in thickness along said direction of compression,
- at least one counter-form (6) of powdery and/or porous composition, having at least one face (7) facing at least one portion (5') of said volume (5),

said assembly (4) being **characterized in that** said portion (5') and said face (7) are separated by at least one deformable interface layer (9).

**2.** Assembly (4) according to claim 1, **characterized in that** said variations of thicknesses are continuous.

**3.** Assembly (4) according to either of the claims 1 and 2, **characterized in that** said counter-form (6) and said volume (5) are of distinct shapes.

**4.** Assembly (4) according to any one of the claims 1 to 3, **characterized in** said counter-form (6) includes said volume (5) in its totality.

**5.** Assembly (4) according to any one of the claims 1 to 4, **characterized in that** the speed of densification of the material constituting said volume (5) is greater than or equal to the speed of densification of the material constituting said counter-form (6).

**6.** Assembly (4) according to any one of the claims 1 to 5, **characterized in that** said volume (5) and said counter-form (6) have a chemical composition and/or a microstructure that are identical.

**7.** Assembly (4) according to any one of the claims 1 to 5, **characterized in that** said volume (5) and said counter-form (6) have a chemical composition and/or a microstructure that are different.

8. Assembly (4) according to any one of the claims 1 to 7, **characterized in that** said portion (5') and said face (7) are separated by a plurality of consecutive deformable interface layers (9).

9. Assembly (4) according to any one of the claims 1 to 8, **characterized in that**:

   • said assembly (4) has a plurality of volumes to be densified (5) having a powdery and/or porous composition and having variations in thickness along said direction of compression,
   • said counter-form (6) has at least one face (7) facing at least one portion (5') of each of said volumes (5),
   • said face (7) and each of said portions (5') are separated by at least one deformable interface layer (9).

10. Method for the fabrication (1) of at least one part (3) of complex shape **characterized in that** it comprises:

   • a step of incorporation (10b, 10'a), within an assembly (4) for densification under load (2) by heating and application of a pressure along at least one direction of compression, of a deformable interface layer (9) having an initial geometrical shape and separating at least one portion (5') of a volume to be densified (5) of a powdery and/or porous composition and having variations of thickness along said direction of compression from at least one face (7) of a counter-form (6) of a powdery and/or porous composition,
   • a step of densification under load (2) of said assembly (4) during which said interface layer (9) is deformed to adopt a final geometrical shape distinct from said initial geometrical shape.

11. Method of fabrication (1) according to claim 10, **characterized in that** it comprises a step (11) of extraction of said part (3) from said assembly (4) by the sacrificial destruction of said counter-form (6) and/or said deformable interface layer (9).

PISTON

MOULE

POUDRE

$Al_2O_3$

PISTON

15 mm

Fig. 1

0,95
0,9
0,85
0,8
0,75
0,7
0,65

DENSITE RELATIVE

Fig. 2

0
-0,5
-1
-1,5
-2
-2,5
-3
-3,5
-4

(m)

Fig. 3

Fig. 4

Fig. 5

Fig. 6

Poudre (pièce)
Poudre (sacrificielle)
Papyex

Fig. 7

**Fig. 8**

**Fig. 9**

**Fig. 10**

**Fig. 11**

**Fig. 12**

d=99%  d=98%

Fig. 13

Fig. 14

Fig. 15

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **P. MONDALEK ; L. SILVA ; M. BELLET.** A Numerical Model for Powder Densification by SPS Technique. *Advanced Engineering Materials,* 2011, vol. 13
- **G. MOLÉNAT ; L. DURAND ; J. GALY ; A. COURET.** Temperature Control in Spark Plasma Sintering: An FEM Approach. *Journal of Metallurgy,* 2010
- **A. PAVIA ; L. DURAND ; F. AJUSTRON ; V. BLEY ; A. PEIGNEY ; C. ESTOURNÈS.** Electro-thermal measurements and finite element method simulations of a spark plasma sintering device. *Journal of Materials Processing Technology,* 2013, vol. 213 (8), 1327-1336
- **T. VOISIN ; L. DURAND ; N. KARNATAK ; S. LE GALLET ; M. THOMAS ; Y. LE BERRE et al.** Temperature control during Spark Plasma Sintering and application to up-scaling and complex shaping. *Journal of Materials Processing Technology,* 2013, vol. 213